# EUROPÄISCHE PATENTSCHRIFT

(11) **EP 0 536 612 B1**
(45) Veröffentlichungstag und Bekanntmachung des Hinweises auf die Patenterteilung: **12.07.1995**
(21) Anmeldenummer: 92116511.4
(22) Anmeldetag: 26.09.1992
(51) Int. Cl.: A23L 1/304, A23C 9/146, A23C 21/00, A23C 21/10

(54) **Verfahren zur Molkenpermeataufarbeitung**
Process for the working up of whey permeate
Procédé pour l'achèvement de perméate de petit-lait

(30) Priorität: 05.10.1991 DE 4133094
(43) Veröffentlichungstag der Anmeldung: 14.04.1993
(73) Patentinhaber: DANMARK PROTEIN A/S, 6920 Videbaek (DK)
(72) Erfinder: Rasche, Helmer, W-3167 Burgdorf (DE); Hartmann, Ulrich, W-3430 Witzenhausen 12 (DE); Grossmann, Monika, W-3163 Sehnde/Ilten (DE); Seifert, Sabine, W-3000 Hannover 1 (DE)
(74) Vertreter: Lauer, Dieter, Dr.

(56) Entgegenhaltungen:
- EP-A- 0 408 756
- DE-A- 3 730 804
- PATENT ABSTRACTS OF JAPAN Band 15, Nr. 256 (C-845), 28.Juni 1991; & JP - A - 3083564 (KYODO NYUGYO K.K.) 09.04.1991
- PATENT ABSTRACTS OF JAPAN Band 12, Nr. 455 (C-548), 29.November 1988; & JP - A - 63179818 (KYODO NYUGYO K.K.) 23.07.1988

## Beschreibung

Die vorliegende Erfindung betrifft ein Verfahren zur Aufarbeitung von Lactose-abgereicherten Molkenpermeaten unter Gewinnung eines kaliumchloridreichen diätetischen Mineralsalzgemisches.

Molke fällt als flüssiges Abfallprodukt bei der Käserei und der Kaseingewinnung an. Neben den darin enthaltenen Molkeproteinen (überwiegend Lactalbumine und Lactoglobuline) enthält die Molke noch weitere gelöste Bestandteile wie Lactose, Mineralsalze, Milchsäure und Reste von Fett bzw. Lipiden und Nichtproteinstickstoff-Verbindungen.

In industriell angewandten Verfahren der Molkenaufbereitung zur Gewinnung verschiedener wertvoller Molkeninhaltsstoffe wird Molke zunächst durch Ultrafiltration in eine proteinreiche Retentatfraktion und eine lactosereiche Permeatfraktion, das sogenannte Molkenpermeat, getrennt. Lactose wird technisch aus Molkenpermeat durch Eindampfen und Kristallisation gewonnen. Die Zusammensetzung des Molkenpermeats kann je nach Typ der eingesetzten Molkeart, der zur Filtration verwendeten Membran, beispielsweise deren Porenweite, sowie den Bedingungen der Ultrafiltration variieren. So kann der in dem Molkenpermeat gelöste Trockensubstanzgehalt zwischen ca. 5 und 15 Gew.-% betragen. Die Hauptbestandteile des Trockensubstanzgehaltes sind Lactose, Mineralsalze, darunter natürliches Calciumphosphat und Nichtproteinstickstoff-Verbindungen (= NPN*). Der pH-Wert und die Zusammensetzung des Molkenpermeates können je nachdem, ob von Süß- oder Sauermolke ausgegangen wurde, variieren. Süßmolkenpermeate haben im allgemeinen einen Trockensubstanzgehalt zwischen 5 und 15 Gew.-%, insbesondere zwischen 5 und 8 Gew.-%. In der Trockensubstanz sind im allgemeinen 70 bis 85 Gew.-% Lactose, 7 bis 15 Gew.-% Proteine und NPN**) und Mineralsalze (entsprechend einem Aschegehalt von 5 bis 10 Gew.-%), darunter 0,3 bis 1 Gew.-% Calcium und 1 bis 4 Gew.-% Phosphat neben weiteren Mineralsalzen, wie Kalium- und Natriumchloriden, enthalten.
*) Als NPN-Verbindungen der Milch werden diejenigen stickstoffhaltigen Milchinhaltsstoffe bezeichnet, welche durch 12 %-ige Trichloressigsäure nicht gefällt werden.
**)Der Gew.-%-Gehalt an Proteinen und/oder NPN wird berechnet als das 6,38-fache des Gew.-%-Gehaltes an Gesamtstickstoff.

Bei der industriellen Gewinnung von Lactose wird das Molkenpermeat im allgemeinen eingeengt und die Lactose aus dem so erhaltenen konzentrierten Molkenpermeat auskristallisiert. Es bleibt dabei ein Lactose-abgereichertes Molkenpermeat mit einem Trockensubstanzgehalt von üblicherweise 5 bis 40 Gew.-% zurück, das noch wertvolle Inhaltsstoffe.

EP-A- 0 408 756 beschreibt ein Verfahren zur Herstellung von Milch-Mineralkonzentrat aus Molke.

Es war die Aufgabe der Erfindung, ein Verfahren zur weiteren Aufbereitung von Lactose-abgereicherten Molkenpermeaten zu finden, welches die Isolierung von weiteren für die menschliche Ernährung wertvollen Molkeninhaltsstoffen in als Nahrungsmittelzusatz geeigneter Form ermöglicht. Ferner war es Aufgabe der Erfindung ein als Kochsalzersatz geeignetes natürliches Mineralsalzgemisch bereitzustellen.

Es wurde nun ein Verfahren gefunden, mit welchem aus Lactose-abgereichertem Molkenpermeat ein als diätetischer Kochsalzersatz geeignetes kaliumchloridreiches Mineralsalzgemisch erhalten werden kann. Das erfindungsgemäße Verfahren zur Aufarbeitung von Lactose-abgereicherten Molkenpermeaten ist dadurch gekennzeichnet, daß man
a) aus einem Lactose-abgereicherten Molkenpermeat durch eine Nanofiltration unter Verwendung einer semipermeablen Membran mit einer Molmassenausschlußgrenze im Bereich von 200 bis 400 und einem Salzrückhaltevermögen für Natriumchlorid im Bereich von 40 bis 60 % ein an mehrwertigen Ionen, Lactose und stickstoffhaltigen Molkeninhaltsstoffen abgereichertes Permeat abtrennt,
b) das abgetrennte Permeat auf einen Trockensubstanzgehalt von 35 bis 60 Gew.-% einengt, ein Mineralsalzgemisch auskristallisieren läßt und das auskristallisierte Mineralsalzgemisch abtrennt.

Als Ausgangsprodukte für das erfindungsgemäße Verfahren können Lactose-abgereicherte Molkenpermeate mit einem Trockensubstanzgehalt zwischen 5 und 40 Gew.-%, vorzugsweise 20 und 30 Gew.-%, eingesetzt werden. Der Trockensubstanzgehalt sowie dessen Zusammensetzung können je nach der vor dem erfindungsgemäßen Verfahren durchgeführten Lactosekristallisation variieren. Lactose-abgereicherte Molkenpermeate mit einem höheren Trockensubstanzgehalt können beispielsweise mit entmineralisiertem Wasser unmittelbar vor Durchführung des erfindungsgemäßen Verfahrens auf den angegebenen Trockensubstanzgehalt verdünnt werden. Überlicherweise liegt der Lactosegehalt, bezogen auf die Trockensubstanz, im Lactose-abgereicherten Molkenpermeat zwischen 40 bis 65 Gew.-%. Der Natriumgehalt beträgt im allgemeinen 2 bis 3 Gew.-%, der Kaliumgehalt 6 bis 9 Gew.-%, jeweils bezogen auf die Trockensubstanz. Der aus NPN-Verbindungen stammende Gesamtstickstoffgehalt beträgt im allgemeinen zwischen 1 und 2,5 Gew.-%, bezogen auf die Trockensubstanz.

Im erfindungsgemäßen Verfahren wird Lactose-abgereichertes Molkenpermeat einer Nanofiltration unterworfen, bei der Membranen mit einer Molmassenausschlußgrenze im Bereich von 200 bis 400 und einem Salzrückhaltevermögen für Natriumchlorid im Bereich von 40 bis 60 %, vorzugsweise 40 bis 50 %, verwendet werden. Das Salzrückhaltevermögen einer Membran kann je nach Salzkonzentration in der zu filtrierenden Lösung und angewandtem Druck variieren. So eignen sich Membranen, deren Salzrückhaltevermögen einem Salzrückhaltevermögen von 40 bis 60 % bei einem NaCl-Gehalt von ca. 2.000 ppm der zu filtrierenden Lösung bei 25 °C Betriebstemperatur entspricht (M.C. Porter (Ed.), Handbook of Industrial Membrane Technology, Seite 267, Park Ridge 1990). Bestimmt wird das angegebene Salzrückhaltevermögen der erfindungsgemäß einsetzbaren Nanofiltrationsmembranen im Druckbereich von 20 bis 40 bar. Es können insbesondere an sich bekannte Nanofiltrationsmembranen, welche ein niedriges Rückhaltevermögen für Salze mit einwertigen Ionen und ein hohes Rückhaltevermögen für Salze mit mehrwertigen Ionen sowie für organische Substanzen mit Molekulargewichten über 300 zeigen, verwendet werden. Die Nanofiltration kann hierbei mit Membranmodulen unterschiedlicher Bauart wie z.B. Flach-, Wickel-, Schlauch-, Hohlfaser- oder Rohrmembranen ausgeführt werden. Als Membranmatrialien kommen die für Nanofiltrationen üblichen Membranmaterialien, z.B. Polyamidmembranen oder Polysulfon/Polyamidmembranen, in Frage. Günstig sind insbesondere solche Membranmaterialien, welche eine negative Oberflächenladung besitzen. Geeignet sind z.B. zusammengesetzte Membranen, welche eine dünne Trennschicht auf einer dickeren Unterschicht mit Stützfunktion besitzen. Solche Membranen können z.B. Phaseninversionsmembranen oder Kompositmembranen sein, bei denen eine dünne Trennschicht über einer mikroporösen Stützschicht und einer Trägerschicht aufgetragen ist. Beispielsweise kann eine Kompositmembran, die aus einem Polyester-Trägermaterial, einer mikroporösen Polysulfonzwischenschicht als Stützschicht und einer dünnen Trennschicht aus vernetzten aromatischen Polyamid besteht, im erfindungsgemäßen Verfahren eingesetzt werden.

Die erfindungsgemäße Nanofiltration wird unter zur Nanofiltration üblichen Bedingungen durchgeführt. Die Temperatur kann beispielsweise zwischen 10 und 80 °C liegen. Vorzugsweise liegt die Temperatur im Bereich von 10 bis 20 °C oder im Bereich von 45 bis 60 °C, um somit das Wachstum einer möglicherweise vorhanden bakteriellen Kontamination im Ausgangsprodukt während der Nanofiltration weitgehend zu unterdrücken.

Der transmembrale Druck kann je nach gewünschtem Molkenpermeatfluß im Zusammenwirken mit den anderen Parametern, wie z.B. der Molmassenausschlußgrenze und dem Salzrückhaltevermögen der Membran, der Modulart und dem Membranmaterial variiert werden. Als zweckmäßig erweist sich beispielsweise die Durchführung des Verfahrens mit Wickelmembran-Modulen mit einer Molmassenausschlußgrenze von 200 bis 400, und einem Salzrückhaltevermögen für Natriumchlorid von ca. 45 %, bei einem transmembralen Druck von 10 bis 60 bar, vorzugsweise von 30 bis 50 bar. Durch die Einstellung des transmembralen Druckes kann der Permeatfluß bei dieser Ausführungsform zwischen 10 bis 60 l/h m², insbesondere zwischen 20 bis 50 l/h m² variieren.

Der pH-Wert des in der Nanofiltration erfindungsgemäß eingesetzten Lactose-abgereicherten Molkenpermeats sollte einen Wert zwischen 5,0 bis 8,0 aufweisen. Als gut geeignet erweist sich ein pH-Wert von 5,0 bis 6,5.

Im erfindungsgemäßen Verfahren kann die Nanofiltration des Lactose-abgereicherten Molkenpermeats lediglich einmal oder, um eine höhere Ausbeute dieses Trennschrittes zu erreichen, gewünschtenfalls auch mehrmals hintereinander erfolgen.

Nach der Nanofiltration wird das erhaltene Nanofiltrationspermeat auf einen Trockensubstanzgehalt von 35 bis 60 Gew.-% eingeengt. Das Einengen des Nanofiltrationspermeats kann bei Temperaturen zwischen 45 und 95 °C, gegebenenfalls unter vermindertem Druck auf an sich bekannte Weise, z.B. in einem handelsüblichen Eindampfer, beispielsweise einem Durchlaufeindampfer oder einem Dünnschichtverdampfer, erfolgen. Zweckmäßigerweise wird das Nanofiltrationspermeat in einem Dünnschichtverdampfer bei Temperaturen von ca. 70 bis 90 °C eingedampft. Das auf den gewünschten Trockensubstanzgehalt eingeengte Konzentrat läßt man auf Raumtemperatur abkühlen, wobei beim Abkühlen sehr schnell die Kristallisation eines Mineralsalzgemisches erfolgt. Gegebenenfalls kann mit kristallinem KCl angeimpft werden.

Das Mineralsalzgemisch kann vom Überstand in an sich bekannter Weise, z.B. über eine Siebzentrifuge, ein Vakuumdrehfilter oder eine Nutsche abgetrennt werden. Nach dem Trocknen erhält man ein Mineralsalzgemisch von heller Farbe und guter Rieselfähigkeit.

Das erhaltene Mineralsalzgemisch zeichnet sich dadurch aus, daß es aus natürlichen Molkenpermeatinhaltsstoffen besteht und 75 bis 90 Gew.-% Kaliumchlorid enthält. Der Lactosegehalt beträgt üblicherweise 2 bis 10 Gew.-%, insbesondere 8 bis 10 Gew.-%. Das erfindungsgemäße Mineralsalzgemisch enthält zudem eine einem Stickstoffgehalt von 0,5 bis 1,5 Gew.-%, vorzugsweise 0,9 bis 1,1 Gew.-%, entsprechende Menge an Nichtprotein-Stickstoffverbindungen. Der Gehalt an Natrium beträgt üblicherweise weniger als 2 Gew.-%, der Gehalt an zweiwertigen Kationen üblicherweise weniger als 0,1 Gew.-% im erfindungsgemäßen Mineralsalzgemisch.

Das erfindungsgemäße Mineralsalzgemisch ist dadurch erhältlich, daß man
a) aus einem Lactose-äbgereicherten Molkenpermeat durch eine Nanofiltration unter Verwendung einer semipermeablen Membran mit einer Molmassenauschlußgrenze im Bereich von 200 bis 400 und einem Salzrückhaltevermögen für Natriumchlorid im Bereich von 40 bis 60 % ein an mehrwertigen Ionen, Lactose und stickstoffhaltigen Molkeninhaltsstoffen abgereichertes Permeat abtrennt,
b) das abgetrennte Permeat auf einen Trockensubstanzgehalt von 35 bis 60 Gew.-% einengt, ein Mineralsalzgemisch auskristallisieren läßt und das auskristallisierte Mineralsalzgemisch abtrennt.

Das erfindungsgemäße überwiegend aus Kaliumchlorid gebildete Mineralsalzgemisch zeichnet sich durch einen sehr niedrigen Gehalt an Natrium-Ionen aus. Es stellt ein Diätsalz aus natürlichen Milchinhaltsstoffen aus rein biologischer Herkunft dar, welches in hervorragender Weise als diätetischer Kochsalzersatzstoff verwendbar ist. In der menschlichen Ernährung eingesetzt kann das erfindungsgemäße Mineralsalzgemisch dazu beitragen, das Gleichgewicht zwischen Kalium- und Natrium-Ionen im menschlichen Organismus zugunsten der Kalium-Ionen zu verbessern. Gegenüber anderen Kochsalzersatzstoffen, insbesondere gegenüber reinem Kaliumchlorid, weist sich das erfindungsgemäße Mineralsalzgemisch besonders durch seine angenehmen Geschmackseigenschaften aus, da die weiteren noch im erfindungsgemäßen Mineralsalzgemisch enthaltenen Inhaltsstoffe den bitteren Eigengeschmack des Kaliumchlorids sehr gut überdecken. Das erfindungsgemäße Mineralsalzgemisch eignet sich somit in ausgezeichneter Weise als diätetisches Speisesalz, z.B. direkt im Haushalt des Endverbrauchers oder bei der industriellen Fertigung von Lebensmitteln.

Das nachfolgende Beispiel soll die Erfindung erläutern, ohne jedoch ihren Umfang zu begrenzen.

### Beispiel

Herstellung eines diätetischen KCl-reichen Mineralsalzgemisches aus natürlichen Molkenpermeatinhaltsstoffen.

### A) Durchführung der Nanofiltration:

Als Ausgangsprodukt wurde ein Lactose-abgereichertes Süßmolkenpermeat verwendet, aus dem zuvor auf an sich bekannte Weise Lactose auskristallisiert worden war. Der gelöste Trockensubstanzgehalt betrug 28,5 Gew.-%. Ca. 110 l Lactose-abgereichertes Süßmolkenpermeat wurden zur Nanofiltration eingesetzt.

Die Nanofiltrationsanlage bestand aus einem Vorlagebehälter, einer Membrankolbenpumpe als Kreislaufpumpe, einem Rohrbündelwärmeaustauscher zur Temperierung und einem Wickelmembranmodul. Die eingesetzte Membran war eine Kompositmembran, bestehend aus einem Polyester-Trägermaterial, einer mikroporösen Polysulfonzwischenschicht als Stützschicht und einer dünnen oberen Schicht aus vernetzten aromatischen Polyamiden als Trennschicht (FilmTec Nanofilm^{R}NF40). Das Salzrückhaltevermögen der Membran lag bei ca. 45 %, bezogen auf einen transmembralen Druck von 20 bar bei 25 °C und 2000 ppm NaCl-Gehalt der zu filtrierenden Lösung.

Das Lactose-abgereicherte Süßmolkenpermeat wurde bei einer Temperatur von ca. 45 °C und einer transmembralen Druckdifferenz von 30 bar zwischen Permeat- und Retentatseite durch das Wickelmembranmodul geleitet. Der pH-Wert betrug 5,8.

Man erhielt ca. 65 l eines Retentats mit einem Trockensubstanzgehalt von 35,6 Gew.-% und ca. 45 l eines Permeats mit einem Trockensubstanzgehalt von 8,5 Gew.-%. Die nachfolgende Tabelle 1 zeigt die Zusammensetzung des Trockensubstanzgehaltes des Lactose-abgereicherten Süßmolkenpermeats vor der Nanofiltration sowie die Zusammensetzungen der Trockensubstanzgehalte des Retentats und des Permeats nach der Nanofiltration.

**Tabelle 1**

| | Zusammensetzung des Trockensubstanzgehaltes in Gew.-%, bezogen auf Trockensubstanz | | |
|---|---|---|---|
| | Lactose-abgereicher-Molkenpermeat vor der Nanofiltration Gew.-% | Retentat Gew.-% | Permeat Gew.-% |
| Lactose | 56,5 | 59,8 | 21,1 |
| Gesamt-N^{*)} (Nichtprotein-N^{*)}) | 1,9 (1,3) | 1,8 (1,2) | 3,4 (3,3) |
| Asche | 22,7 | 18,8 | 63,2 |
| Na⁺ | 2,5 | 2,0 | 7,8 |
| K⁺ | 7,5 | 6,2 | 23,2 |
| Ca²⁺ | 0,8 | 0,9 | 0,1 |
| Mg²⁺ | 0,3 | 0,4 | 0,07 |
| Cl⁻ | 5,8 | 3,9 | 26,1 |

| | | | |
|---|---|---|---|
| *) Stickstoff bestimmt nach der Kjeldahl-Methode | | | |

Die Ergebnisse zeigen, daß durch die Nanofiltration eine deutliche Abreicherung von Lactose und eine deutliche Anreicherung von Kalium im Permeat stattgefunden hatte.

### B) Aufarbeitung des Nanofiltrationspermeats:

20 l des Nanofiltrationspermeats wurden im Dünnschichtverdampfer bei 90 °C bis auf ein Volumen von 4 l mit 42,5 Gew.-% Trockensubstanzgehalt eingedampft. Beim Abkühlen auf Raumtemperatur setzte die Auskristallisation des Mineralsalzgemisches ein. Das Kristallisat wurde auf einer Nutsche unter leichtem Vakuum abgetrennt und in einen Trockenschrank bei ca. 65 °C getrocknet. Man erhielt ein hellfarbiges und gut rieselfähiges Pulver mit folgender Zusammensetzung:

**Tabelle 2**

| Zusammensetzung des erfindungsgemäßen Mineralsalzgemisches in Gew.-%, bezogen auf Trockensubstanz | |
|---|---|
| Trockensubstanzgehalt | 98,60 Gew.-% |
| Lactose | 9,08 Gew.-% |
| Gesamt-N^{*)} (Nichtprotein-N^{*)}) | 0,94 Gew.-% (0,89 Gew.-%) |
| KCl | 79,8 Gew.-% |
| Na⁺ | 1,35 Gew.-% |
| Ca²⁺ | 0,03 Gew.-% |
| Mg²⁺ | 0,02 Gew.-% |

| | |
|---|---|
| *) bestimmt nach der Methode von Kjeldahl. | |

Das so erhaltene kaliumchloridreiche Mineralsalzgemisch zeichnet sich durch seine angenehmen Geschmackseigenschaften aus.

## Patentansprüche

1. Verfahren zur Aufarbeitung von Lactose-abgereichertem Molkenpermeat unter Gewinnung eines kaliumreichen diätetischen Mineralsalzgemisches, dadurch gekennzeichnet, daß man
a) aus einem Lactose-abgereicherten Molkenpermeat durch eine Nanofiltration unter Verwendung einer semipermeablen Membran mit einer Molmassenausschlußgrenze im Bereich von 200 bis 400 und einem Salzrückhaltevermögen für Natriumchlorid im Bereich von 40 bis 60 % ein an mehrwertigen Ionen, Lactose und stickstoffhaltigen Molkeninhaltsstoffen abgereichertes Permeat abtrennt,
b) das abgetrennte Permeat auf einen Trockensubstanzgehalt von 35 bis 60 Gew.-% einengt, ein Mineralsalzgemisch auskristallisieren läßt, und das auskristallisierte Mineralsalzgemisch abtrennt.

2. Diätetisches kaliumreiches Mineralzsalzgemisch, dadurch gekennzeichnet, daß es aus natürlichen Molkenpermeatinhaltsstoffen besteht und 75 bis 90 Gew.-% Kaliumchlorid, 2 bis 10 Gew.-% Lactose und eine einem Stickstoffgehalt von 0,5 bis 1,5 Gew.-% entsprechende Menge an Nichtprotein-Stickstoffverbindungen enthält.

3. Diätetisches kaliumreiches Mineralzsalzgemisch gemäß Anspruch 2, dadurch gekennzeichnet, daß es weniger als 2 Gew.-% Na und weniger als 0,1 Gew.-% an zweiwertigen Kationen enthält.

4. Diätetisches kaliumreiches Mineralzsalzgemisch gemäß Anspruch 2 oder 3, dadurch gekennzeichnet, daß es 8 bis 10 Gew.-% Lactose und eine einem Stickstoffgehalt von 0,9 bis 1,1 Gew.-% entsprechende Menge an Nichtproteinstickstoffverbindungen enthält.

5. Diätisches kalumreiches Mineralsalzgemisch nach einem der Ansprüche 2 bis 4, dadurch erhältlich, daß man
a) aus einem Lactose-abgereicherten Molkenpermeat durch eine Nanofiltration unter Verwendung einer semipermeablen Membran mit einer Molmassenauschlußgrenze im Bereich von 200 bis 400 und einem Sehrückhaltevermögen für Natriumchlorid im Bereich von 40 bis 60 % ein an mehrwertigen Ionen, Lactose und stickstoffhaltigen Molkeninhaltsstoffen abgereichertes Permeat abtrennt,
b) das abgetrennte Permeat auf einem Trockensubstanzgehalt von 35 bis 60 Gew.-% einengt, ein Mineralsalzgemisch auskristallisieren läßt, und das auskristallisierte Mineralsalzgemisch abtrennt.

## Claims

1. A method for processing whey permeate depleted in lactose with the obtention of a potassium-rich dietetic mineral salt mixture, characterised in that
a) a permeate depleted in polyvalent ions, lactose and nitrogen-containing whey contents is separated off from a whey permeate depleted in lactose by nanofiltration using a semipermeable membrane having a molar-mass exclusion limit in the range of 200 to 400 and a salt retention coefficient for sodium chloride in the range of 40 to 60%,
b) the permeate which has been separated off is reduced to a dry-substance content of 35 to 60% by weight, a mineral salt mixture is allowed to crystallise out, and the mineral salt mixture which has crystallised out is separated off.

2. A dietetic potassium-rich mineral salt mixture, characterised in that it consists of natural whey permeate contents and contains 75 to 90% by weight potassium chloride, 2 to 10% by weight lactose and a quantity of non-proteinaceous nitrogen compounds corresponding to a nitrogen content of 0.5 to 1.5% by weight.

3. A dietetic potassium-rich mineral salt mixture according to Claim 2, characterised in that it contains less than 2% by weight Na and less than 0.1% by weight bivalent cations.

4. A dietetic potassium-rich mineral salt mixture according to Claim 2 or 3, characterised in that it contains 8 to 10% by weight lactose and a quantity of non-proteinaceous nitrogen compounds corresponding to a nitrogen content of 0.9 to 1.1% by weight.

5. A dietetic potassium-rich mineral salt mixture according to one of Claims 2 to 4, obtainable in that
a) a permeate depleted in polyvalent ions, lactose and nitrogen-containing whey contents is separated off from a whey permeate depleted in lactose by nanofiltration using a semipermeable membrane having a molar-mass exclusion limit in the range of 200 to 400 and a salt retention coefficient for sodium chloride in the range of 40 to 60%,
b) the permeate which has been separated off is reduced to a dry-substance content of 35 to 60% by weight, a mineral salt mixture is allowed to crystallise out, and the mineral salt mixture which has crystallised out is separated off.

## Revendications

1. Procédé de traitement d'un perméat de petit lait appauvri en lactose, avec obtention d'un mélange diététique de sels minéraux, riche en potassium, caractérisé en ce que :
a) A partir d'un perméat de petit lait appauvri en lactose par une nanofiltration avec utilisation d'une membrane semi-perméable ayant une limite d'exclusion en fonction d'une masse molaire de 200 à 400 et ayant un pouvoir de rétention de sels qui, pour le chlorure de sodium, se situe dans la gamme de 40 à 60 %, on sépare un perméat appauvri en constituants azotés du petit lait, en ions plurivalents, et en lactose,
b) On concentre le perméat ainsi appauvri jusqu'à obtenir une teneur en matière sèche de 35 à 60 % en poids, on laisse se séparer par cristallisation un mélange de sels minéraux et l'on sépare le mélange des sels minéraux qui a ainsi cristallisé.

2. Mélange diététique de sels minéraux riche en potassium, caractérisé en ce qu'il consiste en des constituants d'un perméat de petit lait naturel et en ce qu'il contient 75 à 90 % en poids de chlorure de potassium, 2 à 10 % en poids de lactose et une quantité de composés azotés non protéiniques correspondant à une teneur en azote de 0,5 à 1,5 % en poids.

3. Mélange diététique de sels minéraux riche en potassium selon la revendication 2, caractérisé en ce qu'il contient moins de 2 % en poids de Na et moins de 0,1 % en poids de cations divalents.

4. Mélange diététique de sels minéraux riche en potassium selon la revendication 2 ou 3, caractérisé en ce qu'il contient 8 à 10 % en poids de lactose et une quantité de composés azotés non protéiniques correspondant à une teneur en azote de 0,9 à 1,1 % en poids.

5. Mélange diététique de sels minéraux riche en potassium, selon l'une des revendications 2 à 4, que l'on peut obtenir :
a) A partir d'un perméat de petit lait appauvri en lactose par une nanofiltration effectuée avec utilisation d'une membrane semi-perméable ayant une limite d'exclusion correspondant à une masse molaire comprise de 200 à 400 et ayant pour le chlorure de sodium un pouvoir de rétention de sels de 40 à 60 %, en séparant un perméat appauvri en constituants azotés du petit lait en ions plurivalents, et en lactose,
b) En soumettant le perméat ainsi appauvri à une concentration jusqu'à une teneur en matière sèche de 35 à 60 % en poids, en laissant cristalliser complètement un mélange de sels minéraux et en séparant le mélange des sels minéraux cristallisé.
